# EUROPEAN PATENT APPLICATION

(11) **EP 1 790 593 A1**
(43) Date of publication of application: **30.05.2007**
(21) Application number: 06124569.2
(22) Date of filing: 22.11.2006
(51) Int. Cl.: B65G 47/244, B65G 47/84

(54) **A ring conveyor for the transfer of products, specifically food products**

(30) Priority: 24.11.2005 IT TO20050832
(71) Applicant: OPM S.p.A., 12066 Monticello d'Alba (IT)
(72) Inventor: SPATOLISANO, Francesco, 10088, VOLPIANO (IT); SALVANO, Elio, 12051, ALBA (IT)
(74) Representative: Jorio, Paolo

(57) **Abstract**

A ring conveyor (1) for the transfer of products (2), specifically food products, has a plurality of gripping devices (20), which are drawn along a ring path (27) that during use partially overlaps a belt (3), on which the products approach; the gripping devices (20) are arrangeable in a gripping condition, so as to grab respective products (2) in a loading area (28), and in a releasing condition, so as to release the loaded products in an unloading area (31); the loading and unloading areas (28, 31) are linked to one another by a path portion (30) that is straight in plan view, whereas a cam and tappet rotation device (29) is provided to rotate the gripping devices (20) along such a straight path portion (30) about respective vertical axes (14).

## Description

The present invention relates to a ring conveyor for the transfer of products, specifically food products.

The need is felt to transfer products causing a 90 degree rotation with respect to the position in which the products themselves approach. In order to meet such a requirement, the arrangement of an output conveyor at right angles to an approach conveyor is known: a stop element is provided to stop the products on the output conveyor at the end of the run defined by the approach conveyor, before moving forward on the output conveyor.

The known solutions just described are poorly satisfactory, because on one side collisions and/or rubbing of the products against the stop occur with the consequent risk of damaging the products themselves, and on the other side the output conveyor needs to have a swinging or step-by-step movement in order to correctly receive the products, with consequent limitations in the maximum transfer rates and substantial stresses the engines and the drives of the output conveyor are subjected to. Moreover, the above described known solutions, in which approach and output conveyors are reciprocally at right angles, may not always be installed, because of logistic requirements and/or because of limitations in the maximum available space.

In order to solve the drawbacks relative to the collisions of the products and to the swinging movement of the output conveyor, a so-called "turntable" is known to be provided, which overlaps the approach and output conveyors and comprises a series of gripping arms, which grab the approaching products from above and, after rotating about a central vertical axis, unload the products on the output conveyor. It is although apparent that even the known solutions of the "turntable" type are not capable of solving the drawback of having to arrange the approach and output conveyors in reciprocally orthogonal directions.

It is the object of the present invention to provide a ring conveyor for the transfer of products, specifically food products, which allows to solve the problems set forth above in a simple and cost-effective manner.

According to the present invention there is provided a ring conveyor for the transfer of products, specifically food products, which approach in a row on an approach conveyor; the conveyor comprising:
- a plurality of gripping devices reciprocally spaced along a ring path that during use partially overlaps said approach conveyor;
- motion means to displace said gripping devices along said ring path;
- driving means to arrange said gripping devices in a gripping condition, so as to grab respective products approaching a loading area along said ring path, and in a releasing condition, so as to release the loaded products in an unloading area along said ring path;
characterised in that said loading and unloading areas are linked to one another by a path portion that is straight in plan view, and in that it comprises rotation means to rotate said gripping devices along said straight path portion about respective vertical axes between an angular gripping position and an angular unloading position.

The invention will now be described with reference to the accompanying drawings, which show a non-limitative example of embodiment thereof, in which:
- figure 1 is a plan view of a preferred embodiment of the ring conveyor for the transfer of products, specifically food products, according to the present invention;
- figure 2 is a partial perspective view of the conveyor of figure 1;
- figure 3 is a different perspective view, on an enlarged scale and with parts in break away view, of the conveyor of figure 1;
- figure 4 shows a variant of the conveyor of figure 1 with parts removed for clarity.

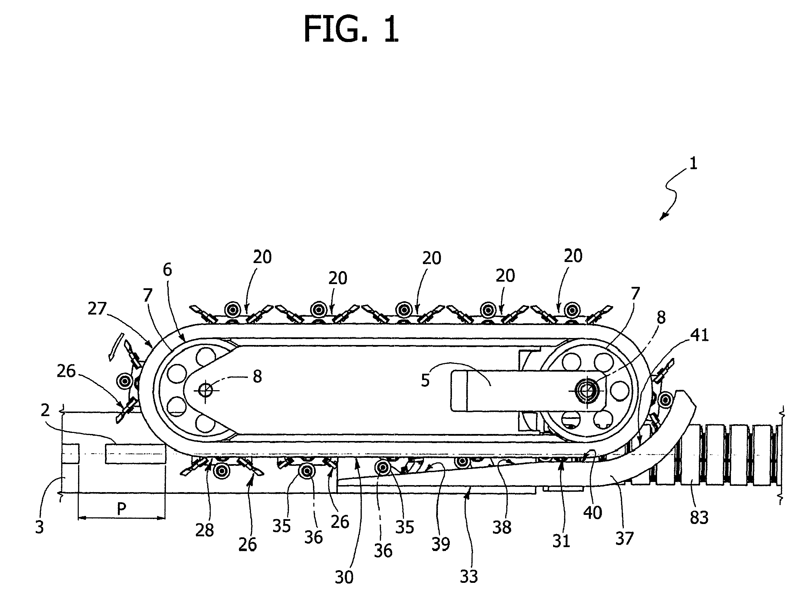

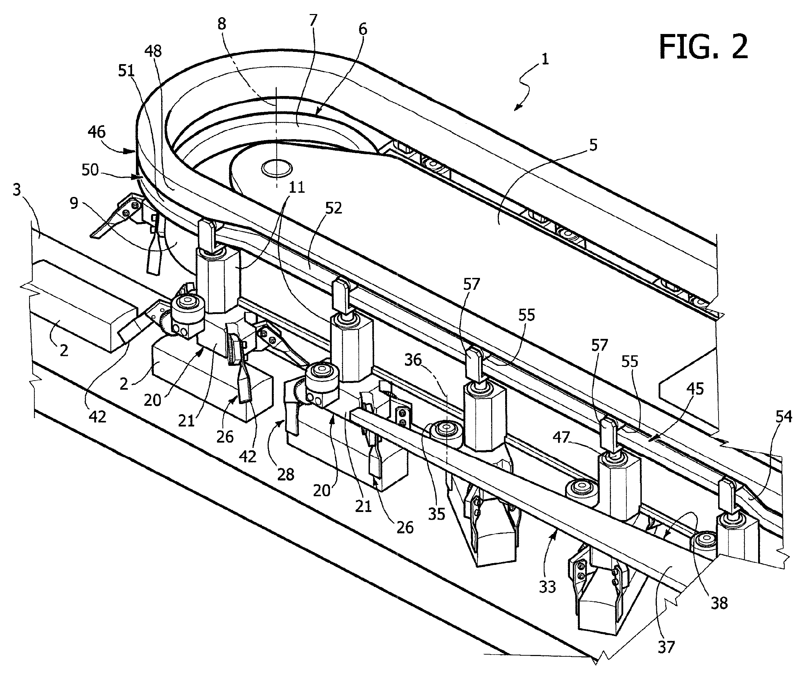

In figure 1, number 1 indicates a ring conveyor for the transfer of products 2, specifically food products, which approach in a row, reciprocally spaced by a predetermined pitch P, below conveyor 1 on a conveyor belt 3. Conveyor 1 comprises a fixed structure 5 and a drawing device 6, powered in a manner not shown and comprising a pair of wheels 7, which are coupled to the structure 5 so as to rotate about respective vertical axes 8. With reference to figure 2, device 6 also comprises a crawler 9, which is ring-like wound around wheels 7, meshes with wheels 7 by means of a toothing (not shown), and carries outside a plurality of tubular attachment bodies 11.

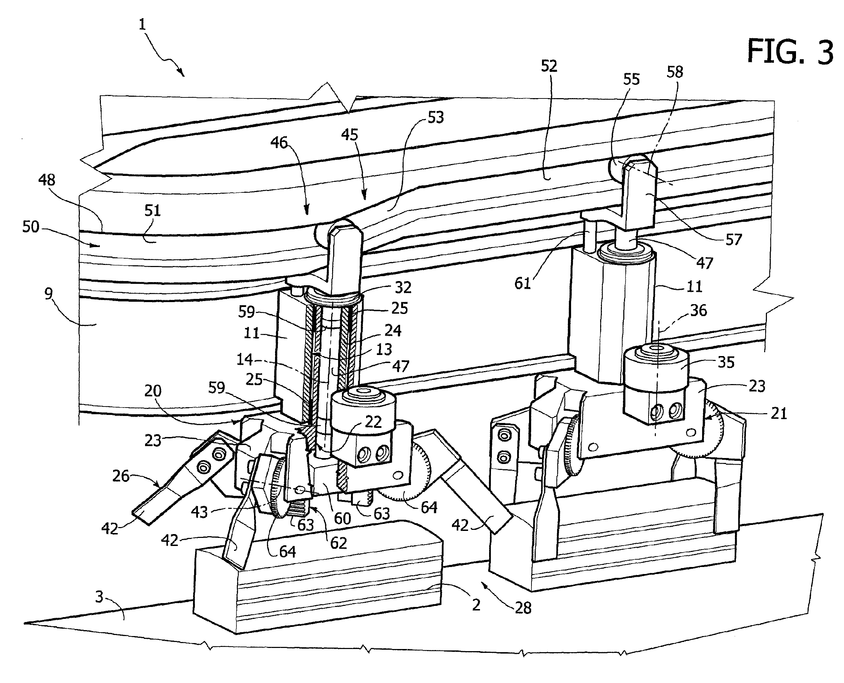

With reference to figure 3, bodies 11 are fixed to the back of crawler 9 in a manner not described in detail, they are reciprocally spaced by a distance equal to pitch P, and have respective cylindrical through seats 13 obtained along respective vertical axes 14. Bodies 11 carry respective grabbing devices 20 which comprise respective bodies 21, which are coaxial and vertically fixed with respect to corresponding bodies 11, and define respective vertical through cavities 22. Bodies 21 comprise respective lower portions 23 arranged outside bodies 11 and respective upper cylindrical portions 24, which engage seats 13 and are hinged to bodies 11 by means of bearings 25 to rotate about axes 14 by 90° between a first and a second angular position.

With reference to figure 1, devices 20 comprise respective clamping members 26, which follow a ring path 27 and, when they reach a loading area 28, are arranged in the first angular position and are actuated to grab products 2 approaching on belt 3. After area 28, members 26 follow a path portion 30, which is straight in plan view, and are rotated from the first to the second angular position. At the end of portion 30, they are actuated in order to release products 2 in an unloading area 31, and subsequently return to the first angular position.

An elastic device 32 (figure 3) is interposed between bodies 11 and 21, and pushes devices 20 towards the first angular position (in an anticlockwise direction in figure 1), whereas a cam and tappet device 33 progressively rotates devices 20 in one direction and therefore, products 2 in the opposite direction. For each device 20, device 33 comprises a relative tappet element defined by a small roll 35, which is hinged to portion 23 about a vertical axis 36, is placed by the side of body 11 and is diametrally opposite to crawler 9 when device 20 is in the first angular position.

Device 33 also comprises a cam 37, which is carried in a fixed position by structure 5 in a manner that is not shown, it defines a side rolling track 38 for small rollers 35, and comprises an initial portion 39 that induces devices 20 to rotate to the second angular portion along path portion 30; an intermediate portion 40 parallel to area 31 of path 27; and a terminal portion 41 that follows devices 20 towards the first angular position after area 31.

According to what is shown in figure 3, each member 26 comprises four arms 42, which are reciprocally spaced about axis 14 and are hinged to portion 23 in a manner that is not shown, to rotate about respective horizontal axes 43 between a closed gripping position and an open releasing position for products 2, under the action of a driving group 45 comprising a cam and tappet device 46 and a vertical connecting rod 47.

With reference to figures 2 and 3, device 46 comprises a cam 48, which is carried by structure 5 in a fixed position above crawler 9 and defines a groove 50 comprising two horizontal portions 51, 52 at different heights, an ascending ramp 53 from portion 51 to portion 52, corresponding to area 28, and a descending ramp 54 from portion 52 to portion 51, corresponding to area 31. For each device 20, device 46 further comprises a relative tappet element defined by a small roller 55 that rolls in groove 50 and is hinged to a bracket 57 about a horizontal rotation axis 58, which is orthogonal to path 27 in a plan view.

With reference to figure 3, rod 47 extends along axis 14, it is partially housed in body 21, it is slidingly coupled to portion 24 by means of bearings 59, and at its upper and lower ends it carries, in a fixed vertical position, both bracket 57 and, respectively, a slide 60, which is free to rotate with respect to bracket 57 about axis 14. Bracket 57 is coupled to body 11 in a vertically sliding manner by means of an anti-rotation vertical eccentric rod 61, whereas slide 60 is coupled inside portion 23 in a vertically sliding and angularly fixed manner.

Slide 60 draws arms 42 in rotation by means of respective toothed drives 62, which comprise respective vertical racks 63 fixed to slide 60 and respective sprocket wheels 64 having axes matching axes 43, fixed to arms 42, and meshed with racks 63.

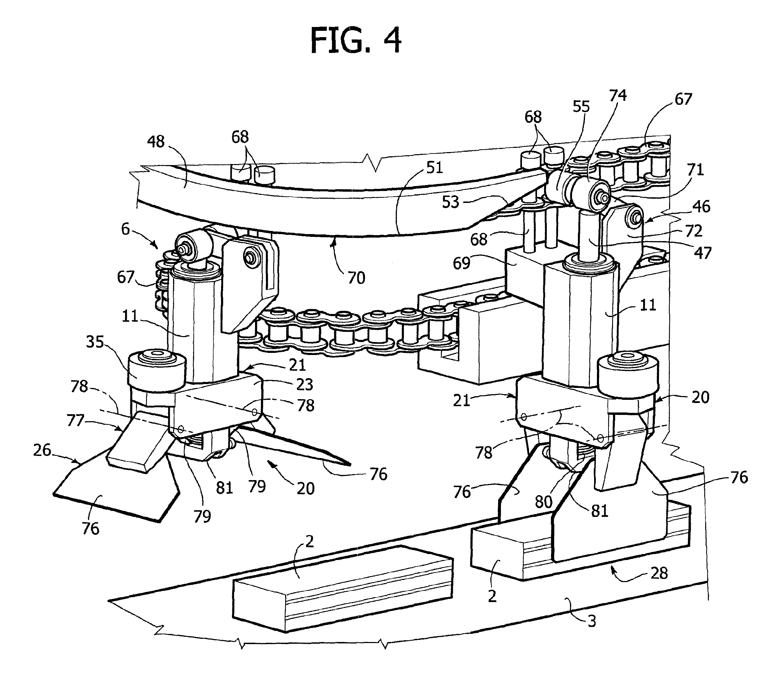

Figure 4 shows a variant of conveyor 1, in which components are referred to where possible with the same numbers used in figures from 1 to 3. The variant of figure 4 is different in that crawler 9 is replaced by two chains 67, which are parallel, vertically spaced, and linked to one another by a series of pairs of small vertical columns 68. Each pair of small columns 68 draws the relative body 11 by means of an arm 69, in which it is fixed to body 11 itself and has two vertical seats engaged by small columns 68. Unlike figures from 1 to 3, cam 48 defines, not a groove, but a rolling track 70 for small rollers 55, interrupted along portion 30 of the path and therefore missing portion 52, whereas the tappet element of device 46 comprises an arm 71, which is hinged to a side appendix 72 of body 11 about an axis parallel to that of small roller 55 and carries another small roller 74 coaxial to and placed by the side of small roller 55, and arranged resting against the upper end of bracket 47 above body 11.

In each device 20, the four arms 42 are replaced by two plate jaws 76 defining part of respective L-shaped levers 77, which comprise respective intermediate portions hinged to portion 23 about horizontal and reciprocally parallel axes 78, and respective arms 79 facing one another and actuated by the lower end of rod 47 in a manner not shown in detail. Member 26 comprises an elastic element 80 interposed along axis 14 between the lower end of rod 47 and a bracket 81 fixed to portion 23 and pre-loaded to push up rod 47, so as to force small roller 55 against track 70 and hold jaws 76 in a closed position during the rotation of device 20 from the first to the second angular position along path portion 30 in which track 70 is missing.

During use, device 6 is synchronised so as to arrange each device 20 exactly above a relative product 2 when the latter enters area 28. At first, in area 28, ramp 53 causes the ascent of rod 47 and thus the closure of member 26. Thereafter, along portion 30, products 2 detach from belt 3, e.g. by the effect of a slight downward inclination of belt 3 itself, and portion 39 of track 38 induces devices 20 to progressively rotate by 90° about respective axes 14. Having products 2 approached area 31, ramp 54 causes the descent of rod 47 and thus the opening of member 26, so as to release products 2 on an output conveyor 83 which in a plan view is aligned with belt 3 (figure 1). Once products 2 are released, portion 41 of track 38 follows devices 20 to the first angular position, which return towards area 28 along the opposite branch of conveyor 1.

It is apparent that conveyor 1 allows to rotate products 2 with respect to the approach position without collisions on products 2 themselves, and at the same time to have an output conveyor 83 aligned with approach belt 3. Furthermore, the actuation by means of cams turns out to be extremely simple and precise, and avoids the use of dedicated actuators and complicated control and drive systems to actuate the rotation of each device 20 and the closure/opening of each member 26.

Conveyor 1 is also relatively compact, maintaining features allowing to achieve a high precision in the positioning of members 26.

From the above, it finally appears clear that modifications and variations may be carried out on the conveyor 1 described, which do not depart from the scope of protection of the present invention.

Specifically, products other than food products may be transferred. The rotation of devices 20 about axes 14 and/or the gripping/release of products 2 may be actuated by systems different from those described, e.g. by electric actuators or by pneumatic systems, controlled in synchrony with the approach of products 2. Moreover, members 26 may be substituted by mechanically or pneumatically actuated suckers, and/or the actuation of the opening/closure motion may be transferred from device 46 to members 26 by modes different from those indicated by way of example, e.g. lever drives or types of toothed drives other than that shown.

## Claims

1. A ring conveyor (1) for the transfer of products (2), specifically food products, which approach in a row on an approach conveyor (3); the conveyor comprising:
- a plurality of gripping devices (20) reciprocally spaced along a ring path (27) which during use partially overlaps said approach conveyor (3);
- motion means (6) to displace said gripping devices (20) along said ring path (27);
- driving means (45) to arrange said gripping devices (20) in a gripping condition, so as to grab respective products (2) approaching a loading area (28) along said ring path (27), and in a releasing condition, so as to release the loaded products in an unloading area (31) along said ring path (27);
**characterised in that** said loading and unloading areas (28, 31) are linked to one another by a path portion (30) that is straight in plan view, and **in that** it comprises rotation means (33) to rotate said gripping devices (20) along said straight path portion (30) about respective vertical axes (14) between an angular gripping position and an angular unloading position.

2. A conveyor according to claim 1, **characterised in that** said rotation means (33) comprise first cam and tappet means.

3. A conveyor according to claim 2, **characterised in that** said first cam and tappet means (33) comprise a first fixed cam (37) arranged along just part of said ring path (27).

4. A conveyor according to claim 2 or 3, **characterised in that** said first cam and tappet means (33) push said gripping devices (20) from said angular gripping position towards said angular unloading position, and **in that** it comprises elastic means (32) to push said gripping devices (20) from said angular unloading position towards said angular gripping position.

5. A conveyor according to any of the preceding claims, **characterised in that** it comprises a plurality of attachment bodies (11) drawn by said motion means (6) along said ring path (27), and **in that** said gripping devices (20) are each coupled in fixed vertical position and in an angularly rotatable manner to a relative attachment body (11) and comprise respective clamping members (26) displaceable between a gripping position and a releasing position.

6. A conveyor according to claim 5, **characterised in that** said driving means (45) comprise second cam and tappet means (46) and drive means (47, 62) to transfer a closure/opening motion to said clamping members (26) from said second cam and tappet means (46).

7. A conveyor according to claim 6, **characterised in that** said attachment bodies (11) have respective vertical through seats (13), and **in that** said drive means (47, 62) extend through said vertical through seats (13).

8. A conveyor according to claim 7, **characterised in that** said gripping devices (20) comprise respective cylindrical hollow portions (24) rotatably engaging said vertical through seats (13) and housing at least part (47) of said drive means.

9. A conveyor according to claim 8, **characterised in that** said drive means (47, 62) comprise a vertical rod (47) vertically translating in said relative cylindrical portion (24).

10. A conveyor according to claim 9, **characterised in that** said drive means (47, 62) comprise at least one sprocket wheel and rack drive actuated by the lower end of said rod.

11. A conveyor according to any of claims from 6 to 10, **characterised in that** said second cam and tappet means (46) comprise a second fixed cam (48) arranged along at least part of said ring path (27) and a plurality of tappet elements (55), each coupled to one of said relative attachment bodies (55) in movable vertical position.

12. A conveyor according to claim 11, **characterised in that** it comprises vertical drive means (47, 61) to couple said tappet elements (55) to said respective attachment bodies (11); said vertical drive means comprising anti-rotation means (61) about said vertical axes (14).

13. A conveyor according to claim 11, **characterised in that** said tappet elements comprise respective arms (71) hinged to said attachment bodies (11) about respective horizontal axes.

14. A conveyor according to any of the preceding claims, **characterised in that** said motion means (6) comprise a drawing crawler (9).

15. A conveyor according to any of claims from 1 to 14, **characterised in that** said motion means (6) comprise two parallel chains (67), which are vertically spaced and linked to one another.
